# EUROPÄISCHE PATENTSCHRIFT

(11) **EP 2 792 965 B1**
(45) Veröffentlichungstag und Bekanntmachung des Hinweises auf die Patenterteilung: **08.06.2016**
(21) Anmeldenummer: 14165331.1
(22) Anmeldetag: 18.04.2014
(51) Int. Cl.: F24H 1/20, F24H 9/00, F24H 9/20, F16K 15/02, F28D 7/02, F24H 9/12

(54) **Wärmespeicher**
Heat accumulator
Accumulateur thermique

(30) Priorität: 19.04.2013 AT 502702013
(43) Veröffentlichungstag der Anmeldung: 22.10.2014
(73) Patentinhaber: Laabmayr, Robert, 5302 Henndorf am Wallersee (AT)
(72) Erfinder: Laabmayr, Robert, 5302 Henndorf am Wallersee (AT)
(74) Vertreter: Jell, Friedrich

(56) Entgegenhaltungen:
- CH-A- 550 985
- DE-A1- 3 840 977
- DE-A1- 19 542 076
- DE-U1- 8 703 576
- DE-U1- 29 612 894

## Beschreibung

Die Erfindung betrifft einen Wärmespeicher mit einem Heizwasser aufweisenden Speicherbehälter, mit, mit dem Speicherbehälter strömungsverbundenen Zu- und Ablaufleitungen für das Heizwasser und mit mindestens einem im Speicherbehälter zu dessen Beladung vorgesehenen Wärmetauscher, der einen mit dem Heizwasser des Speicherbehälters strömungsverbunden Strömungskanal und eine im Strömungskanal zumindest teilweise vorgesehene Wärmetauscherleitung zur Führung eines im indirekten Wärmeaustausch mit dem Heizwasser des Strömungskanals stehenden Wärmeträgers aufweist.

Aus dem Stand der Technik sind Wärmespeicher bekannt (AT511289B1), die einen Strömungskanal in ihrem Speicherbehälter für Heizwasser aufweisen, über den der Wärmespeicher mithilfe freier Konvektion des Heizwassers mit thermischer Energie beladen wird. Hierzu befindet sich im Strömungskanal ein Wärmetauscher in Form einer Leitung zur Führung eines flüssigen Wärmeträgers, der im Wärmeaustausch mit dem Heizwasser des Speicherbehälters steht. Wird dem Wärmetauscher zur Erwärmung des Heizwassers eine vergleichsweise hohe Leistungsfähigkeit sowohl bei einer geringen als auch bei einer hohen Temperaturdifferenz zwischen Heizwasser und Wärmeträger abverlangt, ist konvektionsbedingt mit einem Einbruch im Wirkungsgrad des Wärmetauschers zu rechnen. Derartige Wärmespeicher sind daher im Ausmaß der Beladung mit thermischer Energie begrenzt, was in weiterer Folge ihre Einsetzbarkeit bei Heizkreisen mit geringer und/oder hoher Spreizung einschränkt.

Aus der DE 296 12 894 U1 sind Warmwasserspeicher gemäß dem Oberbegriff des Anspruchs 1 bekannt.

Die Erfindung hat sich daher die Aufgabe gestellt, einen Wärmespeicher der eingangs geschilderten Art derart konstruktiv zu verändern, dass trotz der Möglichkeit einer freien Konvektion zu Wärmetauschzwecken ein hoher Wirkungsgrad gewährleistet werden kann. Zudem soll der Wärmespeicher hohe Kennwerte aufweisen sowie für eine Beladung durch Heizkreise mit geringer und/oder hoher Spreizung geeignet sein.

Die Erfindung löst die gestellte Aufgabe dadurch, dass der Strömungskanal des Wärmetauschers eine Rückschlagarmatur aufweist wobei die Zulaufleitung in den Strömungskanal in dessen Strömungsrichtung nach dieser Rückschlagarmatur einmündet.

Weist der Strömungskanal eine Rückschlagarmatur auf, können damit zunächst Konvektionsverluste im Speicherbehälter vermindert werden, was zur Erhöhung des Nutzungsgrads des Wärmespeichers beitragen kann. Besonders aber kann solch eine Rückschlagarmatur im Strömungskanal dazu genutzt werden, die Leistungsaufnahme des Speicherbehälters zu erhöhen, sodass Leistungsbegrenzungen, wie sie bei freier Konvektion vorliegen können, überwunden und damit die Beladungsfähigkeit des Wärmespeichers deutlich erhöht werden kann. Aufgrund der Rückschlagarmatur kann nämlich die Zulaufleitung in den Strömungskanal in dessen Strömungsrichtung nach seiner Rückschlagarmatur einmünden, und damit dem Wärmetauscher über eine erzwungene Konvektion erhöht thermische Energie indirekt abnehmen. Ein erhöhter Wirkungsgrad des Wärmetauschers kann sich so ergeben, was am erfindungsgemäßen Wärmespeicher erhöhte Leistungsgrenzen ermöglichen kann. Hinzu kommt, dass durch diese alternative, wählbare Konvektion im Strömungskanal auch hohe Reserven in der thermischen Leistungsabnahme zur Verfügung stehen, mit denen vornehmlich auch kurzfristige Leistungsspitzen standfest abgedeckt werden können. Damit kann sich auch ein äußerst flexibel einsetzbarer und hohe Kennwerte aufweisender Wärmespeicher ergeben, der beispielsweise selbst mit hohen und geringen Spreizungen (Differenzen zwischen Vor- und Rücklauf) im Anschlusskreis, dem die Wärmetauscherleitung zugehört, zu Recht kommen kann.

Im Allgemeinen wird erwähnt, dass der Wärmeträger der Wärmetauscherleitung des Wärmetauschers, ein Heizmittel, beispielsweise von einer Solaranlage oder einem Fernwärmenetz, oder ein Kühlmittel, beispielsweise ein Kältemittel eines Kältemittelkreislaufes, sein kann. Zudem wird im Allgemeinen erwähnt, dass zu unter einer freien Konvektion auch natürliche Konvektion verstanden werden kann.

Die Konstruktion kann vereinfacht werden, wenn die Rückschlagarmatur einen plattenförmigen Ventilkörper aufweist und damit beispielsweise in der Bauart eines Tellerrückschlagventils ausgeführt ist. Zudem beeinträchtigen derartige Rückschlagarmaturen die freie Konvektion nur in äußerst geringem Ausmaß. Damit kann möglich werden, vergleichsweise breite Öffnungsquerschnitte am Ventilsitz mit einem vergleichsweise leichten Ventilkörper zu verschließen.

Bildet der Strömungskanal mindestens eine Führungsfläche für den Ventilkörper aus, kann auf Dichtflächen zwischen der Rückschlagarmatur und dem Strömungskanal verzichtet und so eine zusätzliche konstruktive Vereinfachung erreicht werden. Außerdem kann durch diese Bauteilverminderung an der Rückschlagarmatur mit einer erhöhten Standfestigkeit des Wärmespeichers gerechnet werden.

Ist der Ventilkörper lose geführt, kann sich eine konstruktiv besonders einfache Rückschlagarmatur ergeben, weil auf bekannte Rückstellelemente verzichtet werden kann. Die von der freien Konvektion erzeugten Auftriebskräfte können nämlich zum Offenhalten der Rückschlagarmatur ausreichen, womit selbst ein Öffnen der Rückschlagarmatur nach einer erzwungenen Konvektion im Strömungskanal sichergestellt werden kann. Erfindungsgemäß kann sich somit ein besonders standfester Wärmespeicher ergeben.

Weist der Strömungskanal ein Lochblech auf, das den Ventilsitz des Ventilkörpers der Rückschlagarmatur ausbildet, können auch bei geöffnetem Rückschlagventil eine Art Konvektionsbremse geschaffen und so Wärmeverluste im Speicherbehälter reduziert werden. Ein äußerst energieeffizienter Wärmespeicher kann dadurch ergeben.

Die freie Konvektion im Strömungskanal kann zudem verbessert werden, wenn der Ventilkörper Öffnungen aufweist, die auf Lücke zu den Löchern des Lochblechs angeordnet sind.

Vorzugsweise kann die Zulaufleitung einen Anschlag für den Ventilkörper zur Begrenzung dessen Offenstellung ausbilden, um damit konstruktiv eine Bewegungsbegrenzung des Ventilkörpers zu schaffen. Weitere Anschläge für den Ventilkörper können zudem vorgesehen sein.

Einfache Konstruktionsverhältnisse können sich ergeben, wenn die Rückschlagarmatur am Öffnungsende des Strömungskanals vorgesehen ist. Vorzugsweise kann die Rückschlagarmatur am unteren Öffnungsende vorgesehen sein, um damit die freie Konvektion im Strömungskanal bzw. auch die Leitungsführung der Zuleitung zu erleichtern.

Weist der Strömungskanal das Lochblech an seinem Öffnungsende auf, kann zudem der Strömungskanal mechanisch belastbarer ausgeführt werden und somit erhöhten Kräften, insbesondere durch erzwungene Konvektion, standhalten. Ein besonders robuster Wärmespeicher kann dadurch geschaffen werden.

Die Zulaufleitung kann parallel zum Strömungskanal über ein Drosselventil in den Speicherbehälter einmünden. Damit können die Parameter der erzwungenen Strömung durch den Strömungskanal über ein Drosselventil eingestellt werden, beispielsweise passiv geregelt über das Gewicht eines Ventildeckels, der an der Mündungsöffnung der Zulaufleitung vorgesehen ist, die parallel zum Strömungskanal in den Speicherbehälter einmündet.

In den Figuren ist beispielsweise der Erfindungsgegenstand anhand eines Ausführungsbeispiels dargestellt. Es zeigen
- Fig. 1: eine aufgerissene Seitenansicht auf den Wärmespeicher,
- Fig. 2: eine abgerissene Detailansicht der Fig. 1,
- Fig. 3: eine in der Stellung des Ventilkörpers der Rückschlagarmatur veränderte Ansicht zur Fig. 2 und
- Fig. 4: eine Schnittansicht nach IV-IV der Fig. 1.

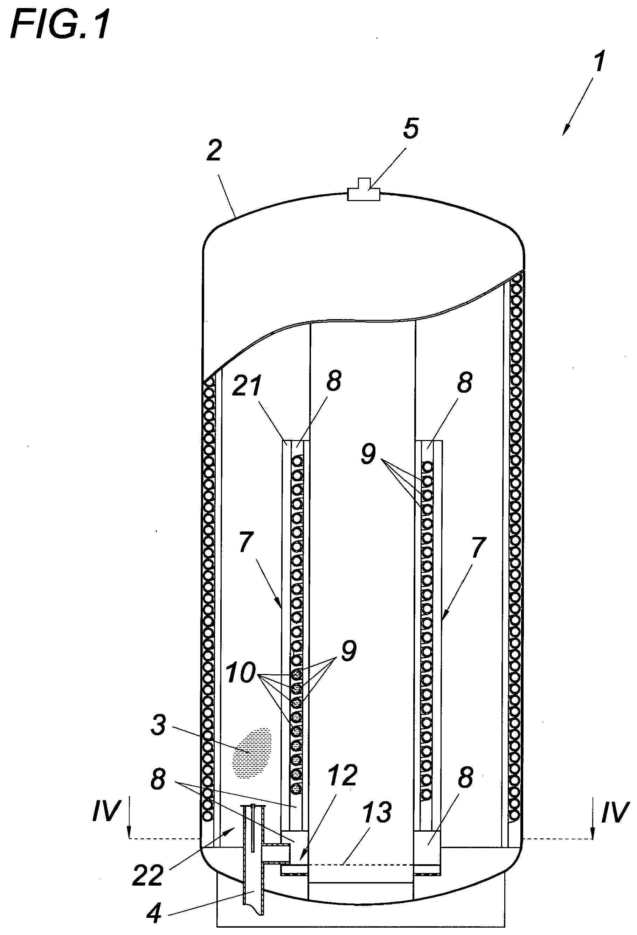

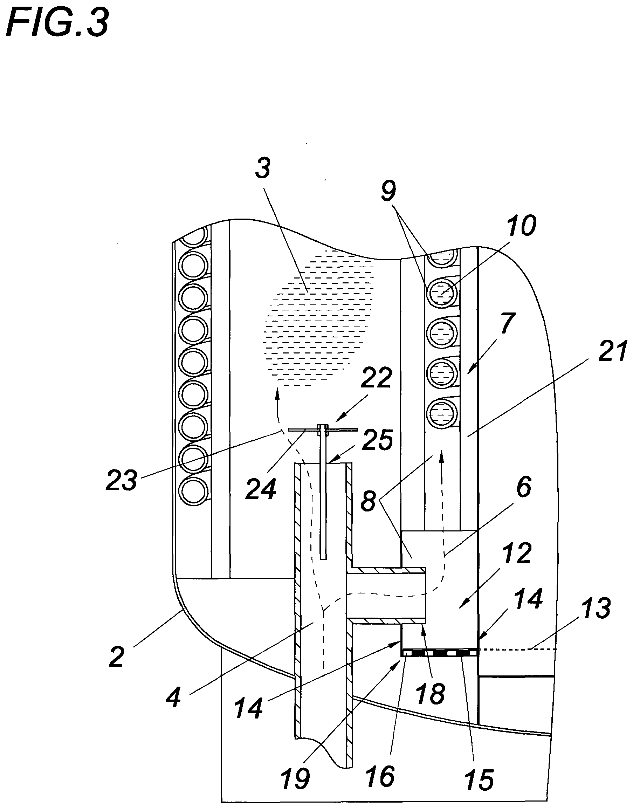

Der gemäß Fig. 1 dargestellte Wärmespeicher 1 weist einen Speicherbehälter 2 für Heizwasser 3 auf. Der Speicherbehälter 2 ist beispielsweise mit einem Heizkreis des thermischen Verbrauchers, mit einer Zulaufleitung 3 und einer Ablaufleitung 5 verbunden. Vorzugsweise stellt die Zulaufleitung 3 den Rücklauf des thermischen Verbrauchers dar, um kaltes Heizwasser 3 in den Speicherbehälter 2 einzubringen. Es ist aber auch vorstellbar, dass die Zu- und Ablaufleitung 4, 5 über eine nicht näher dargestellte Pumpe im Kurzschluss betrieben werden. Im Allgemeinen sind die Zu- und Ablaufleitungen 4, 5 mit dem Speicherbehälter 2 strömungsverbunden und erzeugen im Speicherbehälter 2 eine erzwungene Konvektion 6, wie dies in Fig. 3 erkannt werden kann. Dem Heizwasser 3 des Speicherbehälters 2 kann über einen Wärmetauscher 7 thermische Energie zugeführt bzw. kann dieser damit beladen werden. Hierfür weist der Wärmetauscher 7 einen Strömungskanal 8 auf, der mit dem Heizwasser des Speicherbehälters strömungsverbunden ist. Im Strömungskanal 8 ist eine schraubenförmig verlaufende Wärmetauscherleitung 9 vorgesehen, die einen im indirekten Wärmeaustausch mit dem Heizwasser des Strömungskanals bzw. des Speicherbehälters 2 stehenden Wärmeträger 10 führt und zur Beladung des Speicherbehälters 2 dient.

Dieser Wärmeträger 10 kann beispielsweise ein Heizmittel, beispielsweise von einer Solaranlage oder einem Fernwärmenetz, oder ein Kühlmittel, beispielsweise ein Kältemittel eines Kältemittelkreislaufes, sein. Im letzteren Fall kann die Wärmetauscherleitung 9 der Kondensator eines nicht näher dargestellten Kältemittelkreislaufs einer Erdwärmeheizung darstellen. Bevorzugt ist diese Wärmetauscherleitung 9 als Wellenrohr ausgeführt.

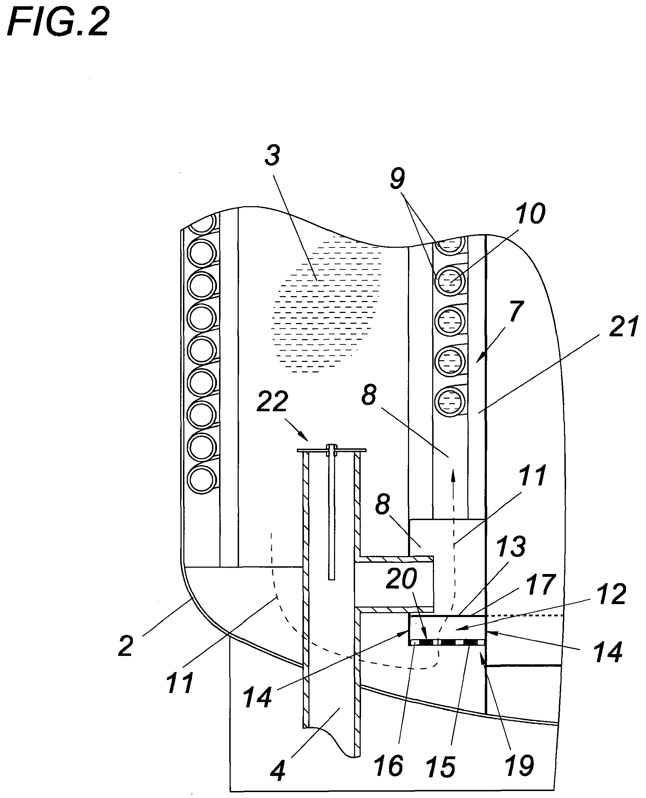

Der Strömungskanal ist derart ausgelegt, dass sich im Falle eines gegenüber dem Heizwasser 3 wärmeren Wärmeträgers 10 eine freie Konvektion 11 durch den Strömungskanal 8 ausbilden kann - solch eine Konvektion 11 ist insbesondere nach Fig. 2 ersichtlich. Diese Leistungsfähigkeit der Übertragung an thermischer Energie mithilfe freier Konvektion 11 ist beschränkt. So ist bei geringer Temperaturdifferenz zwischen Heizwasser 3 und Wärmeträger 10 die Fließgeschwindigkeit mit freier Konvektion 11 unzureichend oder es tritt gar keine freie Konvektion 11 auf. Bei hoher Temperaturdifferenz zwischen Heizwasser 3 und Wärmeträger 10 wird hingegen die übertragene Energie aufgrund der maximalen Fließgeschwindigkeit bei freier Konvektion 11 beschränkt.

Erfindungsgemäß wird dieser Nachteil vermieden, indem der Strömungskanal 8 eine Rückschlagarmatur 12 aufweist und die Zulaufleitung 4 in den Strömungskanal 8 in Strömungsrichtung nach seiner Rückschlagarmatur 12 einmündet. In jenem Fall, in dem vom Wärmespeicher 1 eine erhöhte Leistungsfähigkeit gefordert ist, wird über die erzwungene Konvektion 6 der Zulaufleitung 4 Heizwasser 3 direkt in den Strömungskanal 8 eingeleitet. Damit werden vielseitige Beladungszustände abgedeckt, wodurch der Wärmespeicher 1 bei verschiedensten Installationen verwendbar ist - sei es nun im Fall einer Beladung durch Heizkreise mit einer geringen Spreizung, bei dem eine freie Konvektion nicht oder nur unzureichend entsteht, oder im Fall einer hohen Spreizung, bei der die freie Konvektion beispielsweise durch Gravitation begrenzt ist.

Wie nach den Figuren 1 bis 3 dargestellt, weist die Rückschlagarmatur 12 einen plattenförmigen Ventilkörper 13 auf. Die Rückschlagarmatur 12 hat daher die Bauform eines Tellerrückschlagventils. Verschiedene Lagen des Ventilkörpers 13 sind in den Figuren 2 und 3 zu erkennen. Zu erkennen ist weiter, dass der Ventilkörper 13 lose geführt ist und unterschiedliche Lagen einnehmen kann, was die Rückschlagarmatur 12 in eine Offenstellung nach Fig. 2 bzw. Schließstellung nach Fig. 3 überführt.

Der Strömungskanal 8 bildet auf seiner Innenseite zur linearen Führung des Ventilkörpers seitliche Führungsflächen 14 für den Ventilkörper aus, wodurch dieser besonders stabil geführt ist.

Turbulente Strömungen werden durch die Rückschlagarmatur 12 vermieden, indem ein Lochblech 15 im Strömungskanal 8 vorgesehen ist, das auch den Ventilsitz 20 des Ventilkörpers 13 der Rückschlagarmatur 12 ausbildet.

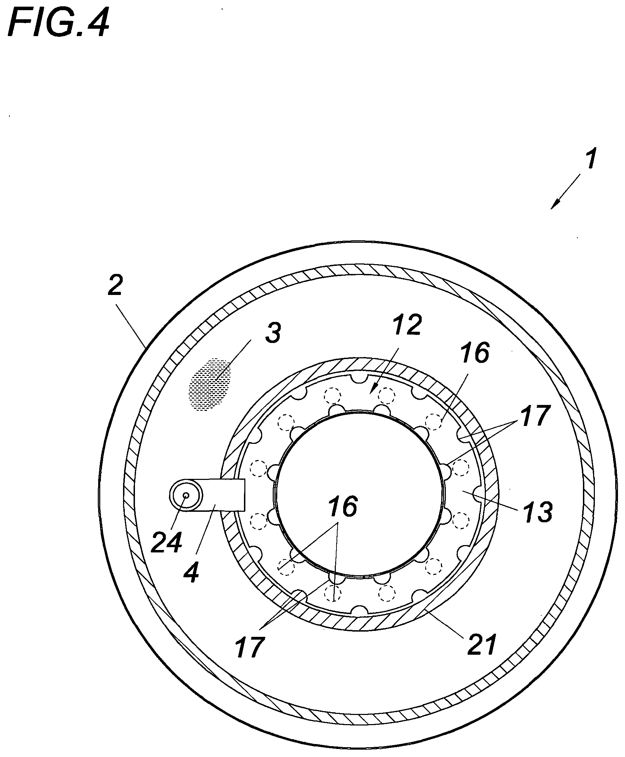

In der Fig. 4 ist insbesondere zu erkennen, dass der Ventilkörper 13 Öffnungen 17 in Form von Ausnehmungen aufweist, die auf Lücke zu den Löchern 16 des Lochblechs 15 liegen, wodurch die Gefahr einer turbulenten Strömung in der Rückschlagarmatur 12 weiter reduziert wird.

Wie in Fig. 3 zu erkennen, bildet die Zulaufleitung 4 einen Anschlag 18 für den Ventilkörper 13 aus. Damit ist die Bewegungsfreiheit des Ventilkörpers 13 begrenzt und auf konstruktiv einfacher Weise die Offenstellung der Rückschlagarmatur 12 festgelegt.

Wie in Fig. 1 zu erkennen, ist die Rückschlagarmatur 12 am unteren Öffnungsende 19 des Strömungskanals 8 vorgesehen. An diesem Öffnungsende 19 ist das Lochblech 15 vorgesehen, das damit den Strömungskanal 8 begrenzt.

Der Strömungskanal 8 ist zudem mit einer Wärmeisolierung 21 versehen, um die freie Konvektion 11 im Speicherbehälter 2 zu erhöhen.

Die Zulaufleitung 4 mündet parallel zum Strömungskanal 8 zusätzlich auch in den Speicherbehälter 2 ein - und zwar über ein Drosselventil 22 - und erzeugt so im Heizwasser 3 des Speicherbehälters 2 eine Strömung 23. Es ist aber auch vorstellbar, dass die Zulaufleitung 4 ausschließlich in den Strömungskanal 8 einmündet, was nicht näher dargestellt worden ist.

Durch das Gewicht des Ventildeckels 24, der an der Mündungsöffnung 25 der Zulaufleitung 4 vorgesehen ist, kann die erzwungene Konvektion 6 durch den Strömungskanal 8 - mithilfe einer Verengung des Strömungsquerschnitts bzw. einer Erhöhung des Strömungswiderstands durch diesen Bereich der Zulaufleitung 4 - eingestellt werden, wie dies besonders in Fig. 3 dargestellt.

Die Konstruktion des Drosselventils 22 bedingt auch im Allgemeinen eine Funktion als Rückschlagventil, indem die Zulaufleitung 4 durch das Drosselelement, also den Ventildeckel 24, verschlossen wird, wenn die Zulaufleitung 4 keine aktive Strömungsbeaufschlagung erfährt bzw. eine freie Konvektion 11 im Strömungskanal 8 vorherrscht.

## Patentansprüche

1. Wärmespeicher mit einem Heizwasser (3) aufweisenden Speicherbehälter (2), mit, mit dem Speicherbehälter (2) strömungsverbundenen Zu- und Ablaufleitungen (4, 5) für das Heizwasser (3) und mit mindestens einem im Speicherbehälter (2) zu dessen Beladung vorgesehenen Wärmetauscher (7), der einen mit dem Heizwasser (3) des Speicherbehälters (2) strömungsverbundenen Strömungskanal (8) und eine im Strömungskanal (8) zumindest teilweise vorgesehene Wärmetauscherleitung (9) zur Führung eines im indirekten Wärmeaustausch mit dem Heizwasser (3) des Strömungskanals (8) stehenden Wärmeträgers (10) aufweist, wobei der Strömungskanal (8) des Wärmetauschers (7) eine Rückschlagarmatur (12) aufweist, **dadurch gekennzeichnet, dass** die Zulaufleitung (4) in den Strömungskanal (8) in dessen Strömungsrichtung nach seiner Rückschlagarmatur (12) einmündet.

2. Wärmespeicher nach Anspruch 1, **dadurch gekennzeichnet, dass** die Rückschlagarmatur (12) einen plattenförmigen Ventilkörper (13) aufweist.

3. Wärmespeicher nach Anspruch 2, **dadurch gekennzeichnet, dass** der Strömungskanal (12) mindestens eine Führungsfläche (14) für den Ventilkörper (13) ausbildet.

4. Wärmespeicher nach Anspruch 2 oder 3, **dadurch gekennzeichnet, dass** der Ventilkörper (13) lose geführt ist.

5. Wärmespeicher nach Anspruch 2, 3 oder 4, **dadurch gekennzeichnet, dass** der Strömungskanal (8) ein Lochblech (15) aufweist, das den Ventilsitz (20) des Ventilkörpers (13) der Rückschlagarmatur (12) ausbildet.

6. Wärmespeicher nach Anspruch 5, **dadurch gekennzeichnet, dass** der Ventilkörper (13) Öffnungen (17) aufweist, die auf Lücke zu den Löchern (16) des Lochblechs (15) angeordnet sind.

7. Wärmespeicher nach einem der Ansprüche 2 bis 6, **dadurch gekennzeichnet, dass** die Zulaufleitung (4) einen Anschlag (18) für den Ventilkörper (13) zur Begrenzung dessen Offenstellung ausbildet.

8. Wärmespeicher nach einem der Ansprüche 1 bis 7, **dadurch gekennzeichnet, dass** die Rückschlagarmatur (12) am, insbesondere unteren, Öffnungsende (19) des Strömungskanals (8) vorgesehen ist.

9. Wärmespeicher nach Anspruch 8 und 5, **dadurch gekennzeichnet, dass** der Strömungskanal (8) das Lochblech (15) an seinem Öffnungsende (19) aufweist.

10. Wärmespeicher nach einem der Ansprüche 1 bis 9, **dadurch gekennzeichnet, dass** die Zulaufleitung (4) parallel zum Strömungskanal (8) über ein Drosselventil (22) in den Speicherbehälter (2) einmündet.

## Claims

1. A heat accumulator, comprising a storage tank (2) having heating water (3), feed and discharge pipes (4, 5) for the heating water (3) which are flow-connected to the storage tank (2), and at least one heat exchanger (7) which is provided in the storage tank (2) for its loading and which comprises a flow channel (8) flow-connected to the heating water (3) of the storage tank (2) and a heat-exchanger line (9) which is provided at least partly in the flow channel (8) for guiding a heat carrier (10) that is in indirect heat exchange with the heating water (3) of the flow channel (8), wherein the flow channel (8) of the heat exchanger (7) comprises a non-return valve (12), **characterized in that** the feed pipe (4) enters the flow channel (8) in its direction of flow after its non-return valve (12).

2. A heat accumulator according to claim 1, **characterized in that** the non-return valve (12) comprises a plate-type valve body (13).

3. A heat accumulator according to claim 2, **characterized in that** the flow channel (12) forms at least one guide surface (14) for the valve body (13).

4. A heat accumulator according to claim 2 or 3, **characterized in that** the valve body (13) is loosely guided.

5. A heat accumulator according to claim 2, 3 or 4, **characterized in that** the flow channel (8) comprises a perforated plate (15) which forms the valve seat (20) of the valve body (13) of the non-return valve (12).

6. A heat accumulator according to claim 5, **characterized in that** the valve body (13) comprises openings (17) which are arranged in a staggered manner in relation to the holes (16) of the perforated plate (15).

7. A heat accumulator according to one of the claims 2 to 6, **characterized in that** the feed pipe (4) forms a stop (18) for the valve body (13) for limiting its open position.

8. A heat accumulator according to one of the claims 1 to 7, **characterized in that** the non-return valve (12) is provided at the opening end (19), more particularly at the bottom opening end (19), of the flow channel (8).

9. A heat accumulator according to claim 8 and 5, **characterized in that** the flow channel (8) comprises the perforated plate (15) at its opening end (19).

10. A heat accumulator according to one of the claims 1 to 9, **characterized in that** the feed pipe (4) opens into the storage tank (2) parallel to the flow channel (8) via a throttle valve (22).

## Revendications

1. Accumulateur de chaleur avec un réservoir d'accumulation (2) contenant de l'eau de chauffage (3), avec des conduites d'arrivée et d'évacuation (4, 5) pour l'eau de chauffage (3) communiquant en vue de l'écoulement avec le réservoir d'accumulation (2), et avec au moins un échangeur de chaleur (7) prévu dans le réservoir d'accumulation (2) pour charger celui-ci, qui présente un canal d'écoulement (8) communiquant en vue de l'écoulement avec l'eau de chauffage (3) du réservoir d'accumulation (2) et une conduite d'échange de chaleur (9) prévue au moins en partie dans le canal d'écoulement (8) et destinée à amener un caloporteur (10) placé en situation d'échange thermique indirect avec l'eau de chauffage (3) du canal d'écoulement (8), dans lequel le canal d'écoulement (8) de l'échangeur de chaleur (7) présente une robinetterie antiretour (12), **caractérisé en ce que** la conduite d'arrivée (4) débouche dans le canal d'écoulement (8) en aval de la robinetterie antiretour (12) dans le sens d'écoulement de celui-ci.

2. Accumulateur de chaleur selon la revendication 1, **caractérisé en ce que** la robinetterie antiretour (12) présente un corps de vanne (13) en forme de plaque.

3. Accumulateur de chaleur selon la revendication 2, **caractérisé en ce que** le canal d'écoulement (12) forme au moins une surface de guidage (14) pour le corps de vanne (13).

4. Accumulateur de chaleur selon la revendication 2 ou 3, **caractérisé en ce que** le corps de vanne (13) est guidé sans serrage.

5. Accumulateur de chaleur selon la revendication 2, 3 ou 4, **caractérisé en ce que** le canal d'écoulement (8) présente une tôle perforée (15) qui forme le siège de vanne (20) du corps de vanne (13) de la robinetterie antiretour (12).

6. Accumulateur de chaleur selon la revendication 5, **caractérisé en ce que** le corps de vanne (13) présente des ouvertures (17) qui sont disposées en quinconce avec les trous (16) de la tôle perforée (15).

7. Accumulateur de chaleur selon une des revendications 2 à 6, **caractérisé en ce que** la conduite d'arrivée (4) forme une butée (18) pour le corps de vanne (13) de façon à délimiter la position d'ouverture de celui-ci.

8. Accumulateur de chaleur selon une des revendications 1 à 7, **caractérisé en ce que** la robinetterie antiretour (12) est prévue à l'extrémité d'ouverture (19), en particulier à l'extrémité d'ouverture (19) inférieure, du canal d'écoulement (8).

9. Accumulateur de chaleur selon les revendications 8 et 5, **caractérisé en ce que** le canal d'écoulement (8) présente la tôle perforée (15) à son extrémité d'ouverture (19).

10. Accumulateur de chaleur selon une des revendications 1 à 9, **caractérisé en ce que** la conduite d'arrivée (4) débouche dans le réservoir d'accumulation (2) parallèlement au canal d'écoulement (8) en passant par une soupape d'étranglement (22).
